(19) Europäisches Patentamt
European Patent Office
Office européen des brevets

(11) **EP 4 597 835 A1**

(12) **EUROPEAN PATENT APPLICATION**
published in accordance with Art. 153(4) EPC

(43) Date of publication:
**06.08.2025 Bulletin 2025/32**

(21) Application number: **24744944.0**

(22) Date of filing: **22.01.2024**

(51) International Patent Classification (IPC):
*H02S 50/10* (2014.01)          *G06Q 50/10* (2012.01)

(52) Cooperative Patent Classification (CPC):
**G06Q 50/10; H02S 50/10**

(86) International application number:
**PCT/KR2024/001022**

(87) International publication number:
**WO 2024/155165 (25.07.2024 Gazette 2024/30)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.01.2023 KR 20230008723**

(71) Applicant: **Hanwha Solutions Corporation
Jung-gu
Seoul 04541 (KR)**

(72) Inventors:
• **HONG, Dahyun
  Seoul 04541 (KR)**
• **NOH, Hong Il
  Seoul 04541 (KR)**
• **YUN, Ju Hwan
  Seoul 04541 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **INVERTER AND MAIN CONTROLLER OF PHOTOVOLTAIC SYSTEM AND COMMUNICATION ERROR DETERMINATION METHOD FOR PHOTOVOLTAICS**

(57)    A communication error determination method for photovoltaic power generation includes transmitting command data to one or more optimizers, receiving response data corresponding to the command data from the one or more optimizers, calculating a no-response count for each of the one or more optimizers based on the response data, and determining a communication error based on the no-response count.

FIG. 5A

FIG. 5B

## Description

## Technical Field

The present disclosure relates to an inverter and a primary controller of a photovoltaic power generation system, and a method of determining a communication error in photovoltaic power generation.

## Background Art

In general, a photovoltaic power generation system refers to a system that converts photovoltaic energy into electrical energy using photovoltaic cells and transmits it to a commercial power grid, and no environmental pollution occurs in this process, and the photovoltaic power generation system may be used semi-permanently.

These photovoltaic power generation systems include a plurality of photovoltaic panels, a plurality of module level power electronics (MLPE), a primary controller, and a server.

The plurality of photovoltaic panels may be connected in at least one of series and parallel, and the plurality of MLPE may be respectively provided in the plurality of photovoltaic panels.

The plurality of MLPEs may include an optimizer capable of optimizing the efficiency of power generated from photovoltaic panels. The optimizer may optimize the efficiency of power of the photovoltaic panels and transmit power generation information including a power generation amount, temperature, and failure information of the photovoltaic panel to the primary controller.

The primary controller may control a plurality of optimizers, and gather the power generation information received from the plurality of optimizers and transmit the same to a server.

The server may monitor a power generation state of the plurality of photovoltaic panels using the power generation information of the plurality of photovoltaic panels.

In case that a communication error occurs between the primary controller and the optimizer, the optimizer may immediately stop a power generation operation of the photovoltaic panel or perform the power generation operation of the photovoltaic panel using a previous operation command. In this case, the primary controller may not monitor the power generation state of the photovoltaic panel.

In addition to the communication error, there may be many cases where the power generation operation of the photovoltaic panel is interrupted (e.g., rapid shutdown, a shutdown command, a damage to the photovoltaic panel), making it impossible to determine whether a cause for the interruption in power generation is a communication error or another cause.

As a result, it is difficult for users to analyze a cause for the interruption of power generation of the photovoltaic panel and find a way to deal with the interruption. As the power generation information of the photovoltaic panel is not transmitted to the server, the server may have difficulty in determining the power generation state of the photovoltaic panel.

## Disclosure

## Technical Problem

The present disclosure provides a communication error determination device and method for an optimizer by which a communication error between a primary controller and the optimizer may be determined in a photovoltaic power generation system.

The present disclosure also provides a communication error determination device and method for an optimizer by which a sensitivity of communication error determination may be adjusted by setting an error determination time according to a communication environment of a photovoltaic panel.

The technical problems obtainable from the present disclosure are not limited to the technical problems mentioned above, and other technical problems not mentioned will be clearly understood by those of ordinary skill in the art to which the present disclosure belongs from the description below.

## Technical Solution

According to an embodiment of the present disclosure, a communication error determination method for photovoltaic power generation includes transmitting command data to one or more optimizers, receiving response data corresponding to the command data from the one or more optimizers, calculating a no-response count for each of the one or more optimizers based on the response data, and determining a communication error based on the no-response count.

In the present disclosure, the calculating of the no-response count may include calculating the no-response count based on a number of times response data is not continuously received for each of the one or more optimizers.

In the present disclosure, the determining of the communication error based on the no-response count may include calculating an error count based on a number of optimizers registered for the photovoltaic power generation and determining, in case that the no-response count exceeds the error count, the communication error of the optimizer corresponding to the no-response count exceeding the error count.

In the present disclosure, the error count may be calculated to be proportional to an error determination time and inversely proportional to one or more of a transmission period or the number of one or more registered optimizers.

In the present disclosure, the transmission period may be set based on an average of a response delay of each of the one or more optimizers.

In the present disclosure, the error determination time may be set in consideration of an influence of disturbance.

In the present disclosure, the communication error determination method may further include adjusting a sensitivity of the communication error determination by adjusting the transmission period and the error determination time.

According to another embodiment of the present disclosure, a primary controller of a photovoltaic power generation system includes a communication unit configured to transmit command data to an optimizer and receive response data in response to the command data from the optimizer and a processor configured to calculate an error count serving as a criterion for detecting a communication error of the optimizer, accumulate a no-response count each time when the response data is not received from the optimizer, and determine that a communication error of the optimizer occurs when the no-response count exceeds the error count.

In the present disclosure, the counter may be configured to reset the no-response count to 0 in case that the response data is received from the optimizer.

In the present disclosure, the processor may be further configured to set an error determination time required to determine the communication error, set a transmission period of the command data between optimizers, register a sequence ID indicating a transmission order of the command data in a registration unit for each optimizer, and check a number of optimizers registered in the registration unit.

In the present disclosure, the processor may be further configured to calculate the error count by dividing the error determination time by a product of the transmission period and the number of optimizers.

In the present disclosure, the error count may be proportional to the error determination time and inversely proportional to the number of optimizers registered in the registration unit.

In the present disclosure, the processor may be further configured to set the error determination time according to a communication environment in which a plurality of photovoltaic panels are installed.

According to another embodiment of the present disclosure, an inverter of a photovoltaic power generation system including a primary controller includes a communication unit configured to transmit command data to one or more optimizers and receive response data in response to the command data from the one or more optimizers and a processor configured to calculate a no-response count for each of the one or more optimizers based on the response data, and determine a communication error for the one or more optimizers based on the no-response count.

**Advantageous Effects**

According to the present disclosure, there is an effect of being able to determine a communication error between a primary controller and an optimizer in a photovoltaic power generation system.

In addition, according to the present disclosure, there is an effect of being able to adjust the sensitivity of communication error determination by setting the error determination time according to the communication environment of the photovoltaic panel.

The effects obtainable from the present disclosure are not limited to the effects mentioned above, and other effects not mentioned will be clearly understood by those skilled in the art to which the present disclosure belongs from the description below.

**Description of Drawings**

FIG. 1 is a schematic diagram illustrating an example of a photovoltaic power generation system according to an embodiment of the present disclosure.

FIG. 2 is a flowchart of an example of a photovoltaic power generation method according to an embodiment of the present disclosure.

FIG. 3 is a block diagram showing an example of a primary controller included in a photovoltaic power generation system according to an embodiment of the present disclosure.

FIG. 4 is a graph illustrating an example of a data transmission/reception process between a primary controller and an optimizer according to an embodiment of the present disclosure.

FIG. 5 is a graph for describing a method of determining a communication error of an optimizer through a data transmission/reception process between a primary controller and an optimizer according to an embodiment of the present disclosure.

FIG. 6 is a graph for describing a method of determining an intermittent error through a data transmission/reception process between a primary controller and an optimizer according to an embodiment of the present disclosure.

FIG. 7 is a flowchart illustrating an example of a method of determining a communication error of an optimizer according to an embodiment of the present disclosure.

FIG. 8 is a flowchart showing an example of an error determination method of a photovoltaic power generation method according to an embodiment of the present disclosure.

**Mode for Invention**

The terms used in the embodiments are general terms that are currently widely used as much as possible, but may vary depending on the intention or precedent of a person working in the art, the emergence of new technology, etc. In addition, in a specific case, the applicant voluntarily may select terms, and in this case, the meaning of the terms may be disclosed in a corresponding description part of the present disclosure. Thus, the terms used in herein should be defined not by the simple names of the terms but by the meaning of the terms and the contents throughout the specification.

Throughout the entirety of the specification of the present disclosure, when it is assumed that a certain part includes a certain component, the term 'including' means that a corresponding component may further include other components unless specially described to the contrary.

In addition, terminology, such as "first" or "second" used herein, can be used to describe various components, but the components should not be limited by the terms. These terms are used to distinguish one component from another component.

Below, the embodiments are described in detail with reference to the attached drawings. However, the embodiments may be implemented in various forms, and are not limited to examples described herein.

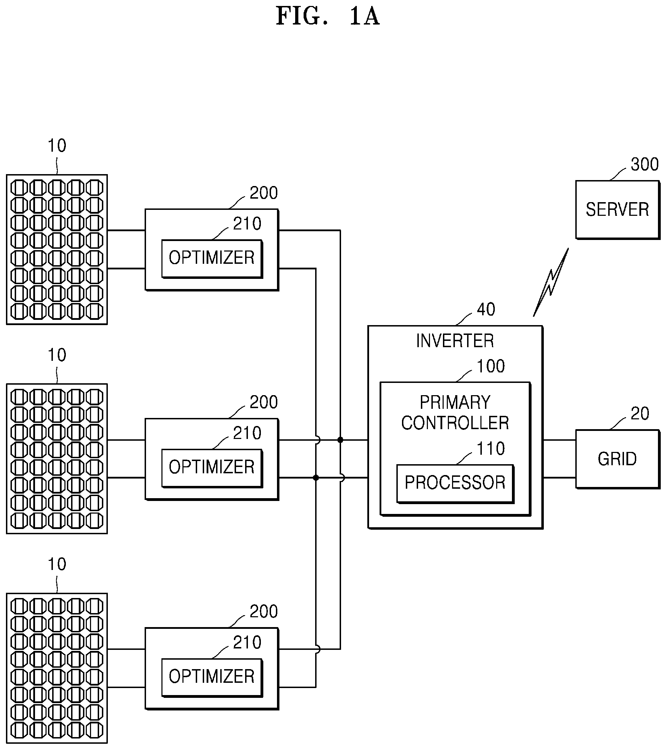

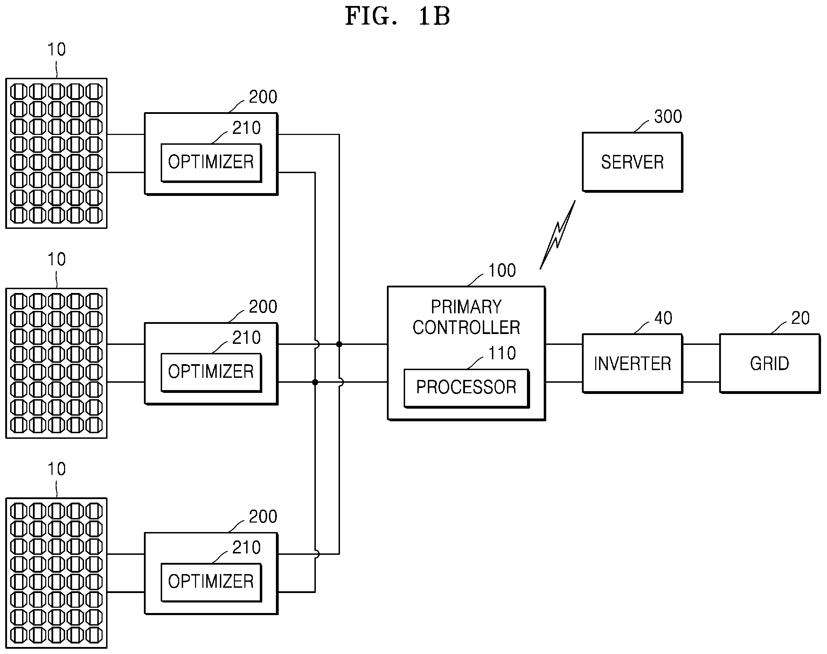

FIG. 1A and FIG. 1B are schematic diagrams illustrating an example of a photovoltaic power generation system according to an embodiment of the present disclosure.

As shown in FIG. 1A, a photovoltaic power generation system according to an embodiment of the present disclosure may include a plurality of photovoltaic panels 10, an inverter 40 including a primary controller 100, a plurality of module level power electronics (MLPE) 200, and a server 300. Alternatively, as shown in FIG. 1B, the photovoltaic power generation system according to another embodiment of the present disclosure may include the plurality of photovoltaic panels 10, the primary controller 100, the plurality of MLPE 200, the inverter 40, and the server 300.

The photovoltaic power generation system according to an embodiment may include the primary controller 100 in the inverter 40 as shown in FIG. 1A, or according to another embodiment, may include the inverter 40 between the primary controller 100 and the grid 20 as in FIG. 1B. Here, the inverter 40 may convert direct current (DC) power generated from the plurality of photovoltaic panels 10 into alternating current (AC) power and transmit the converted AC power to the grid 20.

Hereinafter, for convenience, the following description will be based on an example in which the primary controller 100 is included in the inverter 40 as shown in FIG. 1A. Although the plurality of photovoltaic panels 10 and the plurality of MLPE 200 are collectively referred to below, the photovoltaic panels 10 and the MLPE 200 may be separate from each other and may include different types or models.

According to an embodiment, each of the plurality of photovoltaic panels 10 may mean a photovoltaic power generation panel in the unit of a module. The plurality of photovoltaic panels 10 may be connected in at least one of series and parallel, and the plurality of MLPE 200 may be respectively provided in the plurality of photovoltaic panels 10. Additionally, one MLPE 200 may be connected to one photovoltaic panel 10, or one MLPE 200 may be connected to the plurality of photovoltaic panels 10.

According to an embodiment, the plurality of MLPE 200 may include a module-level inverter to convert power generated from each photovoltaic panel 10 into AC.

According to an embodiment, the plurality of MLPE 200 may include an optimizer 210 capable of optimizing the efficiency of power generated from the photovoltaic panel 10. Although referred to as the optimizer 210 herein, the optimizer 210 may not refer to a specific type of device, but may be understood as a device that includes a power efficiency optimization or maximum power point tracking (MPPT) function. The optimizer 210 may optimize power efficiency by operating in a buck mode to lower an output voltage of the connected photovoltaic panel 10 in case that the output voltage is greater than a maximum power point, and by operating in a boost mode to increase the output voltage in case that the output voltage is less than the maximum power point.

According to an embodiment, the optimizer 210 may perform an rapid shutdown to stop the power generation of the photovoltaic panel 10 in an emergency situation. The plurality of optimizers 210 may transmit power generation information including a power generation amount, a temperature, and failure information of the photovoltaic panel 10 to the primary controller 100 and receive an operation command for optimizing power efficiency from the primary controller 100.

Information transmission/reception between the optimizer 210 and the primary controller 100 may be performed using a power line communication (PLC) method. In case that PLC is used, installation and maintenance of a photovoltaic power generation system may be facilitated because separate communication cables or wireless communication technology for transmitting and receiving information between the plurality of MLPE 200 and the primary controller 100 are not required. As PLC uses power lines, PLC may be more affected by line conditions or an environment than in case that communication cables are used.

According to an embodiment, the primary controller 100 may collect the power generation information received from the plurality of optimizers 210 and transmit the power generation information to the server 300, and the server 300 may monitor the power generation state of the plurality of photovoltaic panels 10 using the power generation information of the plurality of photovoltaic panels 10.

Information transmission and reception between the primary controller 100 and the server 300 may be performed in a wired or wireless manner.

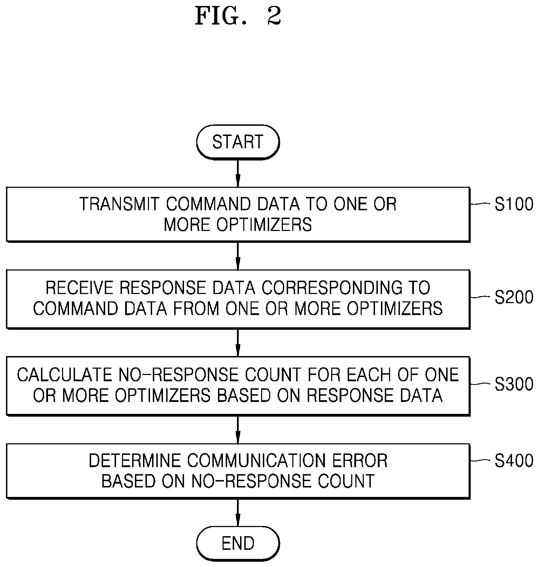

In an embodiment, the primary controller 100 may include a processor 110 which may control the plurality of optimizers 210 according to the power generation state of the photovoltaic panel 10. The processor 110 may obtain response data including the power generation information of the photovoltaic panel 10 from the optimizer 210 to determine an error in the photovoltaic power generation system, including a communication error of the optimizer 210. A specific operation of the processor 110 will be described later with reference to FIG. 2 below.

To monitor the power generation state of the plurality of photovoltaic panels 10, the primary controller 100 may transmit command data to the plurality of optimizers 210, and the plurality of optimizers 210 may transmit response data including power generation information of the photovoltaic panel 10 to the primary controller 100 in response to the command data. The primary controller 100 may collect the power generation information from the plurality of photovoltaic panels 10. The collected power generation information of the photovoltaic panel 10 may be transmitted to the server 300.

The plurality of optimizers 210 may transmit their own unique information (e.g., serial numbers) together with the power generation information such that the primary controller 100 may identify the optimizer 210 having transmitted the power generation information.

In case that the primary controller 100 randomly transmits command data to the plurality of optimizers 210 or the plurality of optimizers 210 randomly transmit power generation information and unique information to the primary controller 100, a communication collision problem may occur between the plurality of optimizers 210, and it is difficult to secure communication periodicity.

In this way, to solve the communication collision problem and secure communication periodicity, the primary controller 100 of the photovoltaic power generation system according to an embodiment of the present disclosure may perform a procedure (hereinafter, a registration procedure) for assigning a sequence ID indicating the order of information transmission and reception between the plurality of optimizers 210.

Thus, the plurality of optimizers 210 may transmit power generation information of the corresponding photovoltaic panel 10 to the primary controller 100 according to their respective sequential IDs to prevent communication collisions and secure communication periodicity.

The procedure for registering the sequence IDs of the plurality of optimizers 210 may be performed during the initial installation of the plurality of optimizers 210 or in replacement of the optimizer 210 having a failure among the plurality of optimizers 210.

A photovoltaic power generation system according to an embodiment may effectively shorten a registration time by automatically performing the procedure for registering the sequence IDs of the plurality of optimizers 210.

In case that a communication error occurs between the primary controller 100 and the optimizer 210, the optimizer 210 may immediately stop the power generation operation of the photovoltaic panel 10 or perform the power generation operation of the photovoltaic panel 10 using a previous operation command. Thus, in case that a communication error occurs between the primary controller 100 and the optimizer 210, the primary controller 100 may not monitor the power generation state of the photovoltaic panel 10.

Reasons for the interruption of the power generation operation of the photovoltaic panel 10 may include rapid shutdown, a shutdown command, and a damage to the photovoltaic panel 10. In this case, as the primary controller 100 may not monitor the power generation state of the photovoltaic panel 10, the user may not obtain a monitoring result, and thus it is impossible to determine whether a cause for the interruption of the power generation operation is a communication error or another cause.

Due to the foregoing problems, it is difficult for the user to analyze the cause for the interruption of power generation and find a way to deal with the interruption. In case that the primary controller 100 may not monitor the state of the photovoltaic panel 10, the power generation information of the photovoltaic panel 10 may not be transmitted to the server 300, making it difficult for the server 300 to determine the power generation state of the photovoltaic panel 10.

To solve such a problem, the photovoltaic power generation system according to an embodiment of the present disclosure may determine an error of the photovoltaic power generation system, including a communication error of the optimizer 210, by analyzing the response data to the command data of the optimizer 210. Hereinbelow, a method for determining an error in a photovoltaic power generation system according to an embodiment will be described.

FIG. 2 is a flowchart for describing an example of determining an error in a photovoltaic power generation system.

In this regard, each operation of FIG. 2 may be performed by the processor 110 of the primary controller 100. In the following specification, for convenience of description, the operation of the processor 110 may be described as the operation of the primary controller 100.

Referring to FIG. 2, first, the primary controller 100 may transmit command data to one or more optimizers 210, in operation S100. Specifically, the primary controller 100 may periodically transmit the command data to the plurality of optimizers 210. According to an embodiment, the command data may be command data requesting the power generation state of the photovoltaic panel 10, monitored by the optimizer 210.

The primary controller 100 may receive response data corresponding to the command data from one or more optimizers 210, in operation S200.

The primary controller 100 may calculate a no-response count for each of the one or more optimizers 210 based on the response data. The no-response count calculated by the primary controller 100 may be a value accumulated each time when the response data is not received consecutively from the optimizer 210, and may be the number of times the response data is not received consecutively for each optimizer 210.

According to an embodiment, the primary controller 100 may calculate an error count that is a criterion for detecting a communication error of the optimizer 210. The primary controller 100 may set an error determination time for calculating an error count and a transmission period for receiving the response data from each optimizer 210. The error count may be the number of cycles repeated during the error determination time, i.e., the number of times the response data is received from the particular optimizer 210 during the error determination time in the absence of a communication error.

The primary controller 100 may determine a communication error based on the no-response count, in operation S400. According to an embodiment, the controller 100 may determine that a communication error has occurred in the particular optimizer 210 in case that the no-response count of the particular optimizer 210 exceeds the error count. According to another embodiment, the primary controller 100 may determine that an intermittent error in PLC has occurred in case that the no-response count is at least 1, but does not exceed the error count. According to another embodiment, the primary controller 100 may determine that an error has occurred in the primary controller 100 in case that the number of no-response counts matches the number of registered optimizers 210.

The primary controller 100 may transmit the response data and information of the optimizer 210 determined to have a communication error to the server 300.

The server 300 may monitor the power generation state of the plurality of photovoltaic panels 10 based on the response data and monitor the communication state of the optimizer 210.

The communication error determination of the optimizer 210 described above may be performed during a normal power generation operation of the photovoltaic panel 10.

As such, the photovoltaic power generation system according to an embodiment of the present disclosure may determine a communication error of the optimizer 210 based on whether there is a response to the command data of the primary controller 100. In case that the power generation operation of the photovoltaic panel 10 is interrupted due to some cause, it is possible to determine whether the cause is a communication error, intermittent communication interruption due to a power line error, or an error in the primary controller, and also to find countermeasures.

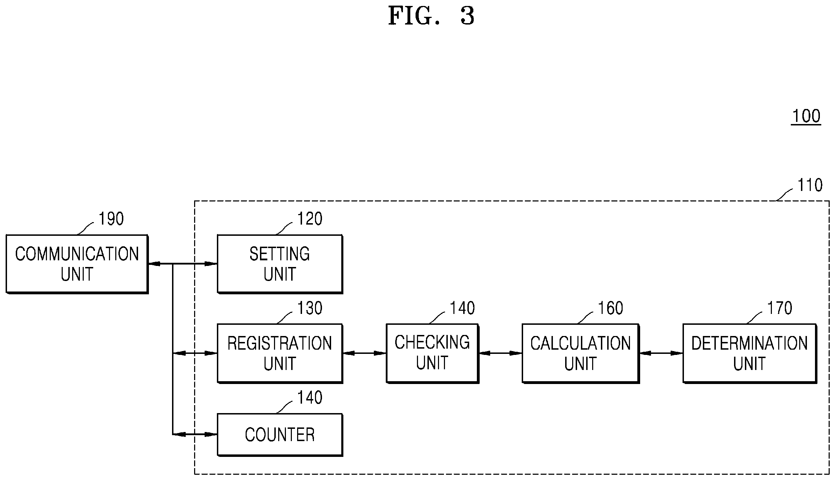

FIG. 3 is a configuration diagram showing an example of a primary controller included in a photovoltaic power generation system according to an embodiment of the present disclosure.

The primary controller 100 included in the photovoltaic power generation system according to the embodiment of the present disclosure may be implemented as a communication error determination device of the optimizer 210.

As shown in FIG. 3, the primary controller 100 may include a communication unit 110 and the processor 110 to determine a communication error of the optimizer 210 provided in the plurality of photovoltaic panels. The processor 110 may include a setting unit 120, a registration unit 130, a checking unit 140, a counter 150, a calculation unit 160, and a determination unit 170. In another embodiment, the processor 110 may include a communication unit 160. However, the above-described units are merely functional components for describing the operation of the processor 110, and the operation of the present disclosure is not limited by division of each unit.

According to an embodiment, the processor 110 may perform at least some of data analysis, processing, and result information generation for performing the operations described above using at least one of a machine learning, neural network, or deep learning algorithm as a rule-based or artificial intelligence algorithm. Examples of neural networks may include models such as a convolutional neural network (CNN), a deep neural network (DNN), and a recurrent neural network (RNN).

For example, the processor 110 may be implemented as an array of a plurality of logic gates, or may be implemented as a combination of a general-purpose microprocessor and a memory storing a program executable on the microprocessor. For example, the processor 110 may include a general-purpose processor, a central processing unit (CPU), a microprocessor, a digital signal processor (DSP), a controller, a microcontroller, a state machine, etc. In some environments, the processor 110 may include an application specific integrated circuit (ASIC), a programmable logic device (PLD), a field programmable gate array (FPGA), etc. For example, the processor 110 may refer to a combination of a DSP and a microprocessor, a combination of a plurality of microprocessors, a combination of one or more microprocessors combined with a DSP core, or a combination of processing devices such as any combination of other such components.

The setting unit 120 of the processor 110 may set an error determination time required to determine a communication error. The registration unit 130 may register a sequence ID indicating the transmission order of command data transmitted by the communication unit 110 to the optimizer 210 for each optimizer 210.

The communication unit 110 may periodically transmit the command data to the plurality of optimizers 210 and receive response data to the command data from the optimizer 210.

The communication unit 110 may sequentially transmit the command data to the plurality of optimizers 210 according to the sequence ID.

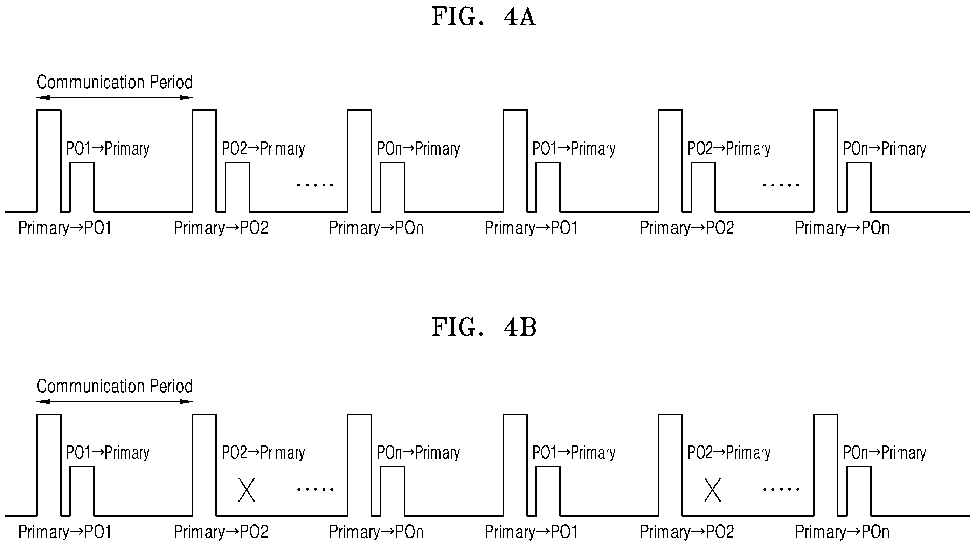

FIG. 4 is a graph showing an example of a data transmission/reception process between a primary controller and an optimizer according to an embodiment of the present disclosure.

Referring to (a) of FIG. 4, the registration unit 130 may assign IDs 1 to n to first to nth optimizers PO1 to POn 210 (where n is an integer of at least 2). In case that the primary controller 100 transmits command data to the first optimizer PO1 210, the first optimizer PO1 210 may transmit response data to the primary controller 100 in response to the command data. In case that the primary controller 100 may transmit command data to the second optimizer PO2 210 after a lapse of a certain communication period, the second optimizer PO2 210 may transmit response data to the primary controller 100 in response to the command data. Once this transmission process is completed up to the nth optimizer POn, one cycle is completed and the next cycle begins.

Upon occurrence of a communication error in the second optimizer PO2 210, as shown in (b) of FIG. 4, even in case that the primary controller 100 transmits the command data to the second optimizer PO2 210, the second optimizer PO2 210 may not transmit response data to the primary controller 100, or even in case that the second optimizer PO2 210 transmits the response data, the response data may not be received by the primary controller 100. In this case, the primary controller 100 may not transmit a monitoring result of the photovoltaic panel 10 corresponding to the second optimizer PO2 210 to the server 300, such that it is difficult for the user to determine whether the interruption of the operation of the photovoltaic panel 10 is caused by a communication error or a problem of the photovoltaic panel 10 itself (such as a damage to the photovoltaic panel 10, etc.).

To solve such a problem, a communication error determination device of an optimizer according to an embodiment may determine a communication error of the optimizer 210 by checking whether he optimizer 210 responds to the command data.

The checking unit 140 may check the number of optimizers 210 registered in the registration unit 130. The setting unit 120 may set an error determination time required to determine a communication error and set a transmission period of command data between the optimizers 210.

According to an embodiment, the setting unit 120 may collect, for each optimizer 210, the time at which response data is received from each optimizer (hereinafter, a response delay) after transmitting data to each registered optimizer 210 to set the transmission period. According to an embodiment, the response delay may be a time between transmitting command data to each optimizer 210 and receiving response data, or may be a time between transmitting a registration start signal to each optimizer 210 in a registration procedure and receiving unique information.

The setting unit 120 may determine the transmission period based on an average of the response delay of each optimizer 210. For example, in case that an average of response delays of the first optimizer is 1 sec, an average of response delays of the second optimizer is 0.5 sec, and a transmission period is set to 0.5 sec, the response data of the first optimizer and the response data of the second optimizer may be received simultaneously, which may cause a communication collision. The setting unit 120 may set a value greater than or equal to a maximum value among the averages of the response delays of each optimizer 210 as the transmission period.

In an additional embodiment, the setting unit 120 may determine the error determination time by in consideration of the influence of disturbance. For example, the error determination time may be set longer as the influence of external disturbance such as weather, interference from electronic devices, power line conditions, etc., increases. The error determination time according to an embodiment may be a time serving as a criterion for determining a communication error of the optimizer 210, and as the error determination time is set short, the sensitivity for determining a communication error of the optimizer 210 may be high. Even in case that temporary communication disconnection occurs due to disturbance for a short error determination time, this case may be determined as a communication error of the optimizer 210, such that to prevent such mis-determination, the error determination time may be set long in case that the influence of disturbance is large.

The calculation unit 160 may calculate an error count serving as a criterion for detecting a communication error of the optimizer 210.

The calculation unit 160 may calculate an error count EC by dividing an error determination time T by a product of a transmission period P and the number N of optimizers 210 registered in the registration unit 130, as in the following Equation 1.

【Equation 1】

$$EC = T/(P * N)$$

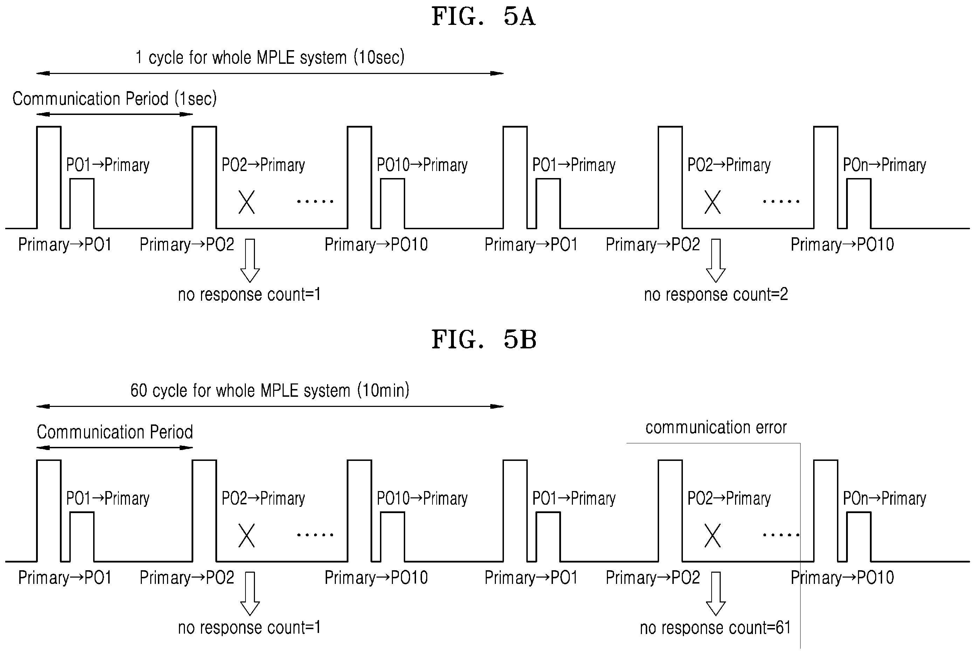

For example, referring to FIG. 5, in case that the communication period P is set to 1 second (sec), the error determination time T is set to 10 minutes (min), and the number N of optimizers 210 registered in the registration unit 130 is 10, the error count EC may be calculated as 60 according to Equation 1.

The error count EC may have the same meaning as the number of cycles repeated during the error determination time T.

That is, the error count EC may be proportional to the error determination time T, inversely proportional to the transmission period T, and inversely proportional to the number N of optimizers 210 registered in the registration unit 130.

The counter 150 may accumulate a no-response count each time when the optimizer 210 does not transmit response data.

The determination unit 170 may determine, as a communication error of the optimizer 210, in case that the no-response count exceeds the error count NC.

FIG. 5 is a graph for describing an example of a method of determining a communication error of an optimizer through a data transmission/reception process between a primary controller and an optimizer according to an embodiment of the present disclosure.

As described above, the counter 150 may accumulate a no-response count each time when the optimizer 210 does not transmit response data. For example, as in (a) of FIG. 5, in case that the second optimizer PO2 210 does not transmit response data or in case that the second optimizer PO2 210 transmits response data but the response data is not received by the primary controller 100, in the first cycle, then a no-response count of the second optimizer PO2 may be counted as 1, and in case that the second optimizer PO2 210 does not transmit response data or in case that the second optimizer PO2 210 transmits response data but the response data is not received by the primary controller 100, in the second cycle, then a no-response count of the second optimizer PO2 may be cumulatively counted as 2.

The determination unit 170 may determine that a communication error has occurred in the optimizer 210 corresponding to the no-response counter in case that the no-response count calculated by the counter 150 exceeds the error count NC. For example, as in (b) of FIG. 5, in case that the error count EC is 60 (60 cycles) and thus the no-response count of the second optimizer PO2 210 is cumulatively counted as 61 exceeding 60, it is determined that a communication error occurs.

According to an embodiment, in case that the transmission period P is a preset value, 1 cycle may vary depending on the number of optimizers 210 registered in the registration unit 130. For example, referring to (a) of FIG. 5, in case that 10 first to 10th optimizers PO1 to PO10 are registered in the registration unit 130, 1 cycle is 10 seconds (sec), but in case that 20 optimizers 210 are registered in the registration unit 130, 1 cycle may be 20 seconds (sec).

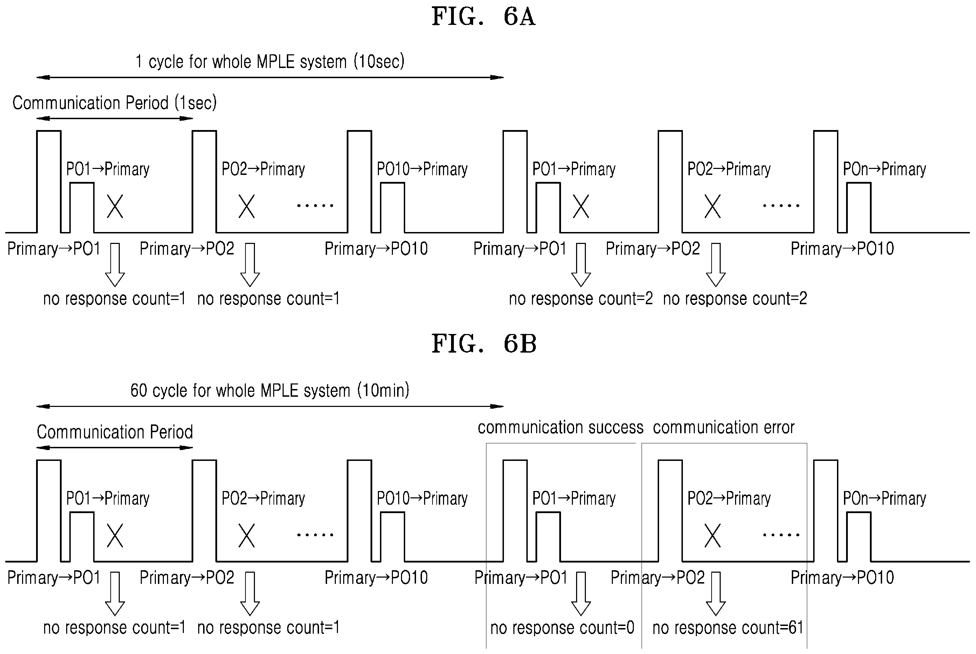

FIG. 6 is a graph for describing another example of a method of determining a communication error of an optimizer through a data transmission/reception process between a primary controller and the optimizer according to an embodiment of the present disclosure.

According to an embodiment, the counter 150 may calculate a no-response counter based on the number of times that response data is not received consecutively for each of the plurality of optimizers 210.

Referring to (a) of FIG. 6, in case that the first optimizer PO1 210 does not transmit response data or in case that the first optimizer PO1 210 transmits response data but the response data is not received by the primary controller 100, in the first cycle, then a no-response count of the first optimizer PO1 may be counted as 1, and in case that the first optimizer PO1 210 does not transmit response data or in case that the first optimizer PO1 210 transmits response data but the response data is not received by the primary controller 100, in the second cycle, then a no-response count of the first optimizer PO1 may be cumulatively counted as 2.

Unlike the second optimizer PO2, referring to (b) of FIG. 6, in case that the primary controller 100 receives response data from the first optimizer PO1 210 in a 61st cycle, i.e., communication is performed normally, the no-response count of the first optimizer PO1 may be 0 and it may be determined that a communication success has been achieved.

In this regard, communication between the primary controller 100 and the optimizer 210 may be performed using a power line communication method, but an actual site where the photovoltaic panel 10 is installed may be vulnerable to communication because an area thereof is wide and a power line is long. Thus, communication may be often interrupted intermittently.

Due to such a vulnerable communication environment, intermittent interruption of communication between the primary controller 100 and the optimizer 210 may be mis-determined as a communication error of the optimizer 210.

To solve such a problem, the counter 150 may calculate a no-response counter based on the number of times that response data is not received consecutively for each of the plurality of optimizers 210. The counter 150 may reset the no-response count to 0 in case that the optimizer 210 transmits response data even once during the error determination time after not transmitting the response data or in case that the primary controller 100 receives the response data.

According to an embodiment, the primary controller 100 may adjust the sensitivity by adjusting the transmission period and the error determination time. The sensitivity may refer to the degree to which a communication error of the optimizer 210 is determined sensitively. The sensitivity may be a value based on the error count EC, and as the error count EC increases, the sensitivity may decrease.

In this regard, as described above, the error count EC is inversely proportional to the number N of optimizers 210 registered in the register 130, such that the error count EC decreases as the number N of optimizers 210 increases.

As the number N of optimizers 210 registered in the registration unit 130 decreases, the sensitivity of communication error determination for the same error determination time T may decrease. In the foregoing example, in case that the number N of optimizers 210 registered in the registration unit 130 decreases from 10 to 5, the error count EC may increase to 120, such that a communication error may be determined in case that the no-response count is 121. Thus, the sensitivity may decrease in comparison to determination of a communication error for a no-response count of 61. In case that there is a user-desired preset sensitivity, the error determination time T may be increased or the transmission period P may be decreased to increase the sensitivity.

In another example, as the error count EC is proportional to the error determination time T, the error count EC may increase as the error determination time T is set long. Thus, as the error determination time T increases, the sensitivity of communication error determination may decrease. In the foregoing example, in case that the error determination time T increases from 10 minutes to 20 minutes, the error count EC may increase to 120, such that it may be determined that a communication error occurs in case that the no-response count is 121. Thus, the sensitivity may decrease in comparison to determination of a communication error for a no-response count of 61. In this way, the setting unit 120 according to an embodiment of the present disclosure may adjust the sensitivity of communication error determination by setting the error determination time T according to the communication environment of the photovoltaic panel 10.

Alternatively, according to another embodiment, the primary controller 100 may prevent user confusion by fixing the error determination time T for determining a communication error such that the sensitivity and the error count EC change together even in case that the number N of optimizers 210 registered in the registration unit 130 changes.

As the error determination time T is the same even in case that the number N of optimizers 210 registered in the registration unit 130 changes, the time required to determine a communication error is the same regardless of the number N of optimizers 210, thereby providing a reference time to the user. Accordingly, it is possible to resolve user confusion due to the time required to determine a communication error varying depending on the number N of optimizers 210 registered in the registration unit 130.

The communication error determination device of the optimizer according to an embodiment of the present disclosure described above may determine a communication error for all of the plurality of optimizers 210 registered in the registration unit 130. In case that all of the plurality of optimizers 210 are determined to have communication errors, it may be determined that an error of the primary controller 100 rather than the communication errors occurs.

The communication unit 110 may transmit information from the optimizer 210 determined to have a communication error to the server 300. Accordingly, the server 300 may identify the optimizer 210 determined to have a communication error based on the information of the optimizer 210.

As such, the communication error determination device of the optimizer according to an embodiment of the present disclosure may determine the communication error of the optimizer 210 based on whether there is a response to the command data of the primary controller 100. In case that the power generation operation of the photovoltaic panel 10 is interrupted for some causes, it is possible to determine whether the cause is a communication error and to find a countermeasure to the communication error.

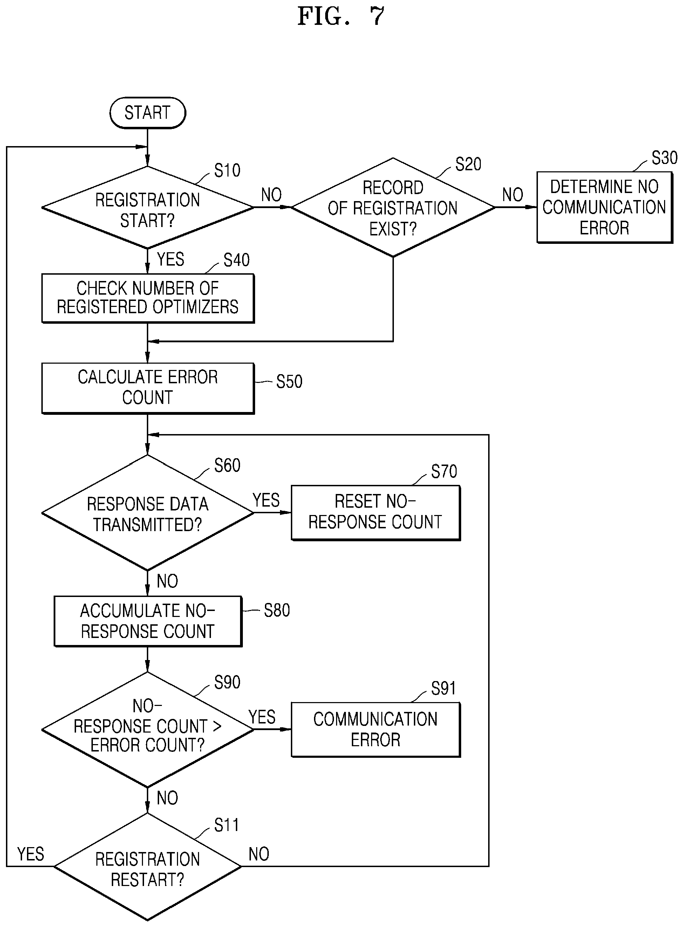

FIG. 7 is a flowchart of a method of determining a communication error of an optimizer according to an embodiment of the present disclosure.

Referring to FIG. 7, a method of determining a communication error of an optimizer according to an embodiment of the present disclosure will be described, but the same details as described above will be omitted.

In operation S10, it is determined whether a registration procedure for registering a sequence ID indicating a transmission order of command data for each optimizer 210 starts.

In operation S20, in case that the registration procedure does not start, it is determined whether there is a record of the pre-registered optimizer 210.

In operation S30, in case that the registration procedure does not start and there is no record of the pre-registered optimizer 210, a communication error may not be determined because there is no target for communication error determination. In case that there is a record of the pre-registered optimizer 210, the number of optimizers 210 registered in the registration unit 130 is already known, such that operation S40 of checking the number of registered optimizers 210 described later may be omitted and the method may move to operation S50 of calculating an error count.

As the number of optimizers 210 registered in the registration unit 130 may change in case that the registration procedure starts, the checking unit 140 may check the number of optimizers 210 registered in the registration unit 130, in operation S40.

In operation S50, the error count serving as a reference for detecting a communication error of the optimizer 210 may be calculated.

The error count EC may be calculated by dividing the error determination time T by a product of the transmission period P and the number N of optimizers 210 registered in the registration unit 130.

In operation S60, it may be determined whether the optimizer 210 has transmitted response data in response to the command data. It may be determined whether response data has been received from the optimizer 210.

In operation S80, each time when the response data is not received from the optimizer 210, a no-response count may be accumulated. In case that the optimizer 210 transmits response data even once during the error determination time after not transmitting the response data, the no-response count is reset to 0, in operation S70.

In operation S90, the no-response count may be compared with the error count NC to determine whether the no-response count exceeds the error count NC.

In operation S91, in case that the no-response count exceeds the error count NC, it may be determined that a communication error of the optimizer 210 occurs. In case that the no-response count does not exceed the error count NC, it may be determined that no communication error of the optimizer 210 occurs, such that it may be determined whether registration restarts in operation S11 and each of the operations described above (operations between S10 and S11) may be repeated.

Hereinbelow, a specific example of communication error determination of the optimizer 210 will be described.

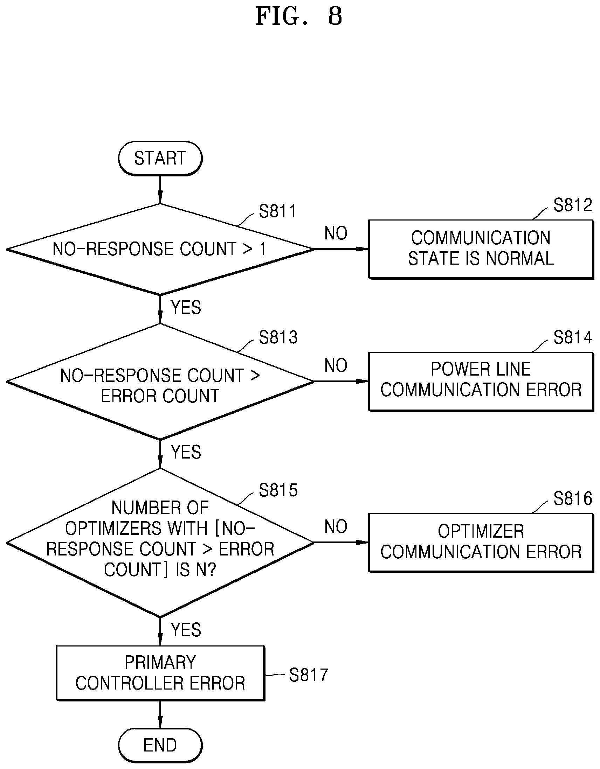

FIG. 8 is a flowchart showing a specific example of an error determination method of a photovoltaic power generation method according to an embodiment of the present disclosure.

Referring to FIG. 8, the primary controller 100 may calculate a no-response count for each of the plurality of optimizers 210 and determine whether there is the optimizer 210 with a no-response count exceeding 1, in operation S811. In case that there is no optimizer 210 with the no-response count exceeding 1, the primary controller 100 may determine that communication states of all of the plurality of optimizers 210 are normal, in operation S812.

In case that there is the optimizer 210 with the no-response count exceeding 1, the primary controller 100 may determine whether the calculated no-response count exceeds an error count, in operation S813. In case that the no-response count does not exceed the error count, the primary controller 100 may determine that a power line communication error occurs due to an intermittent communication failure, in operation S814.

In case that the no-response count exceeds the error count, the primary controller 100 may determine whether the number of optimizers 210 with the no-response count exceeding the error count is n, which is the number of total registered optimizers 210, in operation S815. In case that the number of optimizers 210 with the no-response count exceeding the error count is less than n, it is determined that a communication error of the corresponding optimizer 210 occurs in operation S816, and in case that the number of optimizers 210 with the no-response count exceeding the error count is n, it is determined that an error of the primary controller occurs in operation S817.

As such, the method for determining a communication error of an optimizer according to an embodiment of the present disclosure may determine a communication error of the optimizer 210 based on whether there is a response to command data of the primary controller 100. In case that the power generation operation of the photovoltaic panel 10 is interrupted for a certain cause, it is possible to determine whether the cause is a communication error and to find a countermeasure to the cause.

The above-described method may be written as a program executable on a computer, and may be implemented in a general-purpose digital computer that operates the program using a computer-readable recording medium. A data structure used in the above-described method may be recorded on a computer-readable recording medium through various means. The computer-readable recording medium may include a storage medium such as a magnetic storage medium (e.g., read-only memory (ROM), random access memory (RAM), a universal serial bus (USB), a floppy disk, a hard disk, etc.) and an optical read medium (e.g., compact disc (CD)-ROM, a digital versatile disc (DVD), etc.).

It would be understood by those of ordinary skill in the art that the present disclosure may be implemented in a modified form within a scope without departing from the essential characteristics of the present disclosure. Therefore, the disclosed methods should be considered in an illustrative rather than a restrictive sense, and the scope of the claims, not the foregoing description, should be interpreted to include all differences falling within the scope equivalent thereto.

**Explanation Of Reference Numerals Designating The Major Elements Of The Drawings**

100: Primary Controller
200: MLPE
210: Optimizer
300: Server

**Claims**

1. A communication error determination method for photovoltaic power generation, the communication error determination method comprising:

    transmitting command data to one or more optimizers;
    receiving response data corresponding to the command data from the one or more optimizers;
    calculating a no-response count for each of the one or more optimizers based on the response data; and
    determining a communication error based on the no-response count.

2. The communication error determination method of claim 1,
    wherein the calculating of the no-response count comprises: calculating the no-response count based on a number of times response data is not continuously received for each of the one or more optimizers.

3. The communication error determination method of claim 1,
   wherein the determining of the communication error based on the no-response count comprises:

   calculating an error count based on a number of optimizers registered for the photovoltaic power generation; and
   determining, in case that the no-response count exceeds the error count, the communication error of an optimizer corresponding to the no-response count exceeding the error count.

4. The communication error determination method of claim 3,
   wherein the error count is calculated to be proportional to an error determination time and inversely proportional to one or more of a transmission period or the number of one or more registered optimizers.

5. The communication error determination method of claim 4,
   wherein the transmission period is set based on an average of a response delay of each of the one or more optimizers.

6. The communication error determination method of claim 4,
   wherein the error determination time is set in consideration of an influence of disturbance.

7. The communication error determination method of claim 1, further comprising adjusting a sensitivity of the communication error determination by adjusting the transmission period and the error determination time.

8. A primary controller of a photovoltaic power generation system, the primary controller comprising:

   a communication unit configured to transmit command data to an optimizer and receive response data in response to the command data from the optimizer; and
   a processor configured to calculate an error count serving as a criterion for detecting a communication error of the optimizer, accumulate a no-response count each time when the response data is not received from the optimizer, and determine that a communication error of the optimizer occurs when the no-response count exceeds the error count.

9. The primary controller of claim 8, wherein the processor is further configured to reset the no-response count to 0 in case that the response data is received from the optimizer.

10. The primary controller of claim 8, wherein the processor is further configured to set an error determination time required to determine the communication error, set a transmission period of the command data between optimizers, register a sequence ID indicating a transmission order of the command data in a registration unit for each optimizer, and check a number of optimizers registered in the registration unit.

11. The primary controller of claim 10, wherein the processor is further configured to calculate the error count by dividing the error determination time by a product of the transmission period and the number of optimizers.

12. The primary controller of claim 10, wherein the error count is proportional to the error determination time and inversely proportional to the number of optimizers registered in the registration unit.

13. The primary controller of claim 10, wherein the processor is further configured to set the error determination time according to a communication environment in which a plurality of photovoltaic panels are installed.

14. A computer-readable recording medium having recorded thereon a program for causing a computer to execute the method of claim 1.

# FIG. 1A

# FIG. 1B

EP 4 597 835 A1

# FIG. 2

START

TRANSMIT COMMAND DATA TO ONE OR MORE OPTIMIZERS — S100

RECEIVE RESPONSE DATA CORRESPONDING TO COMMAND DATA FROM ONE OR MORE OPTIMIZERS — S200

CALCULATE NO-RESPONSE COUNT FOR EACH OF ONE OR MORE OPTIMIZERS BASED ON RESPONSE DATA — S300

DETERMINE COMMUNICATION ERROR BASED ON NO-RESPONSE COUNT — S400

END

# FIG. 3

# FIG. 4A

Communication Period

Primary→PO1 | PO1→Primary | Primary→PO2 | PO2→Primary | · · · | Primary→POn | POn→Primary | Primary→PO1 | PO1→Primary | Primary→PO2 | PO2→Primary | · · · | Primary→POn | POn→Primary

# FIG. 4B

Communication Period

Primary→PO1 | PO1→Primary | Primary→PO2 | PO2→Primary (X) | · · · | Primary→POn | POn→Primary | Primary→PO1 | PO1→Primary | Primary→PO2 | PO2→Primary (X) | · · · | Primary→POn | POn→Primary

# FIG. 5A

1 cycle for whole MPLE system (10sec)

Communication Period (1sec)

PO1→Primary   PO2→Primary   PO10→Primary   PO1→Primary   PO2→Primary   POn→Primary

X   ·····   X   ·····

Primary→PO1   Primary→PO2   Primary→PO10   Primary→PO1   Primary→PO2   Primary→PO10

no response count=1   no response count=2

# FIG. 5B

60 cycle for whole MPLE system (10min)

Communication Period   communication error

PO1→Primary   PO2→Primary   PO10→Primary   PO1→Primary   PO2→Primary   POn→Primary

X   ·····   X   ·····

Primary→PO1   Primary→PO2   Primary→PO10   Primary→PO1   Primary→PO2   Primary→PO10

no response count=1   no response count=61

## FIG. 6A

1 cycle for whole MPLE system (10sec)

Communication Period (1sec)

PO1→Primary     PO2→Primary     PO10→Primary     PO1→Primary     PO2→Primary     POn→Primary

Primary→PO1     Primary→PO2     Primary→PO10     Primary→PO1     Primary→PO2     Primary→PO10

no response count=1   no response count=1       no response count=2   no response count=2

## FIG. 6B

60 cycle for whole MPLE system (10min)

Communication Period                          communication success  communication error

PO1→Primary     PO2→Primary     PO10→Primary     PO1→Primary     PO2→Primary     POn→Primary

Primary→PO1     Primary→PO2     Primary→PO10     Primary→PO1     Primary→PO2     Primary→PO10

no response count=1   no response count=1       no response count=0   no response count=61

EP 4 597 835 A1

# FIG. 7

START

S10 REGISTRATION START? —NO→ S20 RECORD OF REGISTRATION EXIST? —NO→ S30 DETERMINE NO COMMUNICATION ERROR

YES

S40 CHECK NUMBER OF REGISTERED OPTIMIZERS

S50 CALCULATE ERROR COUNT

S60 RESPONSE DATA TRANSMITTED? —YES→ S70 RESET NO-RESPONSE COUNT

NO

S80 ACCUMULATE NO-RESPONSE COUNT

S90 NO-RESPONSE COUNT > ERROR COUNT? —YES→ S91 COMMUNICATION ERROR

NO

S11 REGISTRATION RESTART? —NO→

YES

# FIG. 8

START

↓

S811 NO-RESPONSE COUNT > 1 —NO→ S812 COMMUNICATION STATE IS NORMAL

↓ YES

S813 NO-RESPONSE COUNT > ERROR COUNT —NO→ S814 POWER LINE COMMUNICATION ERROR

↓ YES

S815 NUMBER OF OPTIMIZERS WITH [NO-RESPONSE COUNT > ERROR COUNT] IS N? —NO→ S816 OPTIMIZER COMMUNICATION ERROR

↓ YES

S817 PRIMARY CONTROLLER ERROR

↓

END

## INTERNATIONAL SEARCH REPORT

<table>
<tr><td colspan="2">International application No.</td></tr>
<tr><td colspan="2">**PCT/KR2024/001022**</td></tr>
</table>

| A. | CLASSIFICATION OF SUBJECT MATTER |
|---|---|

**H02S 50/10**(2014.01)i; **G06Q 50/10**(2012.01)i

According to International Patent Classification (IPC) or to both national classification and IPC

| B. | FIELDS SEARCHED |
|---|---|

Minimum documentation searched (classification system followed by classification symbols)

H02S 50/10(2014.01); F24J 2/38(2006.01); G01R 31/40(2006.01); H01L 31/04(2006.01); H01L 31/042(2006.01); H01M 10/42(2006.01); H02J 13/00(2006.01); H04L 12/40(2006.01); H04L 12/403(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 태양광(solar), 에러 카운트(error count), 주제어기(main controller), 통신 (communication), 에러(error), 옵티마이저(optimizer)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2016-0116617 A (ELECTRONICS AND TELECOMMUNICATIONS RESEARCH INSTITUTE) 10 October 2016 (2016-10-10) See paragraph [0026] and figure 2. | 1-3,7-9,14-16,20 |
| A | | 4-6,10-13,17-19 |
| Y | KR 10-2019-0060389 A (LG CHEM, LTD.) 03 June 2019 (2019-06-03) See paragraphs [0073]-[0083] and figure 5. | 1-3,7-9,14-16,20 |
| A | KR 10-2014-0133667 A (MOKPO NATIONAL UNIVERSITY INDUSTRY-ACADEMIA COOPERATION GROUP et al.) 20 November 2014 (2014-11-20) See claims 1-7 and figure 1. | 1-20 |
| A | JP 2002-305844 A (SEKISUI CHEM CO., LTD. et al.) 18 October 2002 (2002-10-18) See entire document. | 1-20 |

✓ Further documents are listed in the continuation of Box C.  ✓ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **01 May 2024** | **01 May 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/001022** |

**C.      DOCUMENTS CONSIDERED TO BE RELEVANT**

| Category* | Citation of document, with indication, where appropriate, of the relevant passages | Relevant to claim No. |
| --- | --- | --- |
| A | EP 4072075 A1 (SUNGROW POWER SUPPLY CO., LTD.) 12 October 2022 (2022-10-12)<br>See entire document. | 1-20 |

Form PCT/ISA/210 (second sheet) (July 2022)

**INTERNATIONAL SEARCH REPORT**
Information on patent family members

International application No.

**PCT/KR2024/001022**

| Patent document cited in search report | | | Publication date (day/month/year) | Patent family member(s) | | | Publication date (day/month/year) |
|---|---|---|---|---|---|---|---|
| KR | 10-2016-0116617 | A | 10 October 2016 | None | | | |
| KR | 10-2019-0060389 | A | 03 June 2019 | CN | 110546849 | A | 06 December 2019 |
| | | | | CN | 110546849 | B | 24 March 2023 |
| | | | | EP | 3637577 | A1 | 15 April 2020 |
| | | | | EP | 3637577 | B1 | 27 January 2021 |
| | | | | JP | 2020-520212 | A | 02 July 2020 |
| | | | | JP | 6926229 | B2 | 25 August 2021 |
| | | | | KR | 10-2180138 | B1 | 17 November 2020 |
| | | | | PL | 3637577 | T3 | 17 May 2021 |
| | | | | US | 11165263 | B2 | 02 November 2021 |
| | | | | US | 2020-0106278 | A1 | 02 April 2020 |
| | | | | WO | 2019-103364 | A1 | 31 May 2019 |
| KR | 10-2014-0133667 | A | 20 November 2014 | KR | 10-1596800 | B1 | 23 February 2016 |
| JP | 2002-305844 | A | 18 October 2002 | None | | | |
| EP | 4072075 | A1 | 12 October 2022 | AU | 2021-240619 | A1 | 18 August 2022 |
| | | | | AU | 2021-240619 | B2 | 14 March 2024 |
| | | | | CN | 113448172 | A | 28 September 2021 |
| | | | | CN | 113448452 | A | 28 September 2021 |
| | | | | CN | 113448452 | B | 03 March 2023 |
| | | | | EP | 3886111 | A1 | 29 September 2021 |
| | | | | EP | 4099141 | A1 | 07 December 2022 |
| | | | | EP | 4131546 | A1 | 08 February 2023 |
| | | | | JP | 2021-157799 | A | 07 October 2021 |
| | | | | JP | 2023-518629 | A | 08 May 2023 |
| | | | | JP | 7186255 | B2 | 08 December 2022 |
| | | | | KR | 10-2022-0157928 | A | 29 November 2022 |
| | | | | KR | 10-2523034 | B1 | 17 April 2023 |
| | | | | US | 11526080 | B2 | 13 December 2022 |
| | | | | US | 2023-0106494 | A1 | 06 April 2023 |
| | | | | US | 2023-0354669 | A1 | 02 November 2023 |
| | | | | WO | 2021-190388 | A1 | 30 September 2021 |
| | | | | WO | 2021-190462 | A1 | 30 September 2021 |

Form PCT/ISA/210 (patent family annex) (July 2022)